# EUROPEAN PATENT APPLICATION

(11) **EP 4 404 369 A1**
(43) Date of publication of application: **24.07.2024**
(21) Application number: 22948207.0
(22) Date of filing: 27.06.2022
(51) Int. Cl.: H01M 50/536

(54) **STACKING APPARATUS AND STACKING METHOD FOR BATTERY CELL MODULE**

(71) Applicant: Contemporary Amperex Technology Co., Limited, Ningde, Fujian 352100 (CN)
(72) Inventor: ZHANG, Chengmei, Ningde, Fujian 352100 (CN); QIU, Kun, Ningde, Fujian 352100 (CN); WU, Ying, Ningde, Fujian 352100 (CN)
(74) Representative: Holt, Lucy Rose
(86) International application number: PCT/CN2022/101371
(87) International publication number: WO 2024/000082

(57) **Abstract**

The present application relates to the technical field of battery manufacturing, and in particular, to a stacking apparatus and stacking method for a battery cell module. The stacking apparatus for a battery cell module of the present application comprises a frame, a supporting mechanism, a pressing mechanism, and a tray. The supporting mechanism is used for supporting battery cells; the pressing mechanism is connected to the frame; a part of the pressing mechanism is capable of moving along the axial direction of the supporting mechanism, and the pressing mechanism is used for pressing a plurality of battery cells into a battery cell module; and the tray is arranged on the frame in a manner of being movable relative to the frame, and is used for supporting the battery cell module. In the technical solution of the present application, the pressing process of the battery cell module does not need to be operated on the tray, such that the length size of the tray is reduced, the manufacturing cost of the tray is reduced, and the length of a production line is reduced, thereby reducing the floor space of the stacking apparatus, and further facilitating the arrangement of other devices.

## Description

### FIELD

The present disclosure relates to the field of battery manufacturing technologies, and more particularly, to a cell module stacking device and a cell module stacking method.

### BACKGROUND

With vigorous promotion of the field of new energy, electric vehicles will become a mainstream trend in the future. The key for electric vehicle design is BMC technology, including battery technology, motor technology, and electronic control technology. As the most core power supply component in a whole vehicle, a power battery determines the key indicators such as a mileage, cost, a service life, safety performance of the whole vehicle.

In the related art, a cell module of the power battery is usually formed by stacking a plurality of cells. With an improvement in requirements of a modulization efficiency of the cell module, a length of the cell module is continuously lengthened. In the related art, the plurality of cells are pressed and stacked on a tray to form the cell module, and the cell module is transferred through the tray. Since the plurality of cells needs to be stacked at intervals prior to stacking, a length of the tray is increased accordingly, which increases manufacturing costs of the tray and extends a length of a production line.

### SUMMARY

In view of defects in the related art, embodiments of the present disclosure provide a cell module stacking device and a cell module stacking method, which can effectively reduce the length of the tray and reduce manufacturing costs of a tray.

In one embodiment, the present disclosure provides a cell module stacking device including: a rack; a support mechanism configured to support a plurality of cells; a pressing mechanism connected to the rack, a part of the pressing mechanism is movable in an axial direction of the support mechanism, and the pressing mechanism is configured to press the plurality of cells into a cell module; and a tray disposed on the rack in such a manner that the tray is movable relative to the rack, the tray is configured to support the cell module.

In a technical solution of the present disclosure, the support mechanism is provided. The plurality of cells are disposed on the support mechanism. The plurality of cells are pressed into the cell module through the movement of the pressing mechanism in the axial direction of the support mechanism. The cell module is transferred to the tray, and are transferred to a next procedure through the tray. The extrusion process of the cell module no longer needs to be operated on the tray, which reduces the length of the tray and reduces the manufacturing costs of the tray. Meanwhile, the length of the production line is shortened, reducing the floor space of the stacking device, further facilitating an arrangement of other apparatuses. In addition, since the length of the tray is shortened, the transferring efficiency of the tray can be improved, thereby improving the production efficiency.

Meanwhile, since the stacking is not carried out on the tray and the cell module only needs to be transferred to the tray for transferring, scratches caused by sliding of the cell module on the tray can be effectively prevented.

In some embodiments of the present disclosure, the support mechanism includes a first support member and a second support member that are arranged in parallel, each of the first support member and the second support member is connected to the rack in a relatively slidable manner and configured to slide in a direction perpendicular to the axial direction of the support mechanism, and the first support member and the second support member is relatively close to each other or relatively far away from each other. By connecting each of the first support member and the second support member to the rack in the relatively slidable manner, a space between the first support member and the second support member can be adjusted based on a length of the cell, thereby supporting cells of different lengths.

In some embodiments of the present disclosure, the stacking device further includes a retractable mechanism connected to the rack, the first support member and the second support member each is connected to the retractable mechanism and is relatively close to each other or relatively far away from each other under an action of the retractable mechanism. Since the retractable mechanism is configured to control the first support member and the second support member to move relatively close to each other or relatively far away from each other, an automation degree of the stacking device can be effectively improved.

In some embodiments of the present disclosure, the retractable mechanism includes a first drive member and a second drive member, the first drive member is connected to the first support member in a driving manner and is configured to drive the first support member, and the second support member is connected to the second drive member in a driving manner. Since the first support member and the second support member control the first drive member and the second drive member, respectively, the automation degree of the stacking device can be further improved, and cells having asymmetric structures can be supported, to enable a center of the cell having an asymmetric structure to coincide with a center of the rack.

In some embodiments of the present disclosure, the tray is disposed on the rack in a relatively slidable manner, when the first support member and the second support member are spaced apart from each other and form a first opening, the tray is configured to slide to a position below the support mechanism and exactly face towards the first opening. Since the tray is disposed on the rack in the relatively slidable manner and the tray exactly faces towards the first opening formed between the first support member and the second support member during sliding of the tray in the sliding process of the tray, the cell module is conveniently transferred to the tray positioned below the support mechanism through the first opening, thereby transferring the cell module to the next procedure through the tray.

In some embodiments of the present disclosure, the stacking device further includes at least one tray locking mechanism. The tray is provided with at least one gripping assembly disposed thereon, the at least one tray locking mechanism is detachably connected to the at least one gripping assembly, and the at least one tray locking mechanism is configured to drive the at least one gripping assembly to move, so that the at least one gripping assembly grips or releases the cell module on the tray. Since the at least one tray locking mechanism is connected to the at least one gripping assembly, movements of the at least one gripping assembly can be controlled to grip or release the cell module on the tray, which allows a position of the cell module relative to the tray to be fixed. In this way, the cell module is transferred to the next procedure through the tray, avoiding dropping of the cell during transferring.

In some embodiments of the present disclosure, the at least one tray locking mechanism includes a third drive member, a fourth drive member, and a locking member. The locking member is configured to be connected to the at least one gripping assembly, moves in a vertical direction under driving of the third drive member, and drives the at least one gripping assembly to move together in the axial direction of the support mechanism under an action of the fourth drive member. By driving, by means of the third drive member, the locking member to move in the vertical direction, the locking member can be avoided during movements of the tray to prevent the locking member from interfering with the movements of the tray and from affecting normal movements of the tray. By driving, by means of the fourth drive member, the locking member to drive the at least one gripping assembly to move together in the axial direction of the support mechanism, the cell module can be smoothly placed on the tray and fixedly gripped by the at least one gripping assembly, which allows the position of the cell module relative to the tray to be fixed.

In some embodiments of the present disclosure, the stacking device further includes a lifting mechanism connected to the rack. The lifting mechanism at least includes a top plate that is capable of moving up and down, the tray has a second opening passing through the tray, and the top plate is abutted against the cell module by passing through the second opening and the first opening sequentially. After the plurality of cells is pressed into the cell module, the top plate of the lifting mechanism is controlled to be abutted against the cell module by passing through the second opening and the first opening sequentially, to support the cell module by using the top plate. Then, the first support member and the second support member are controlled to be relatively far away from each other to expand the first opening, the top plate is controlled to move down and drive the cell module to move together to pass through the first opening. Further, the cell module is placed on and supported by the tray, which facilitates transferring of the cell module.

In some embodiments of the present disclosure, in the axial direction of the support mechanism, a length of the top plate is smaller than a length of the second opening and greater than a length of the cell module. Setting the length of the top plate to be smaller than the length of the second opening can ensure that the top plate passes through the second opening smoothly during lifting and lowering of the top plate. Setting the length of the top plate to be greater than the length of the cell module can ensure that the cell module is entirely supported within the length of the cell module, preventing the cell module from falling during transferring the cell module to the tray due to a lack of support underneath the cell module.

In some embodiments of the present disclosure, in the direction perpendicular to the axial direction of the support mechanism, a width of the second opening is smaller than a width of the cell module. Since the length of the top plate is smaller than the length of the second opening and greater than the length of the cell module, the length of the cell module is smaller than the length of the second opening. By setting the width of the first opening to be smaller than the width of the cell module, the cell module can be effectively prevented from falling through the second opening.

In some embodiments of the present disclosure, the lifting mechanism further includes a mounting plate and a fifth drive member. The mounting plate is connected to the rack, and the fifth drive member is fixed to the mounting plate and is connected to the top plate in a driving manner, to drive the top plate to move up and down. The lifting mechanism is fixed to the rack by the mounting plate, and the top plate is driven by the fifth drive member to move up and down, which can effectively support the cell module and transfer the cell module to the tray.

In some embodiments of the present disclosure, the stacking device further includes a brush mechanism at least including a brush. The brush is capable of in the axial direction of the support mechanism and configured to clean the support mechanism. By providing the brush and moving the brush in the axial direction of the support mechanism, a surface of the support mechanism can be effectively cleaned to remove dust and/or particles on the support mechanism, preventing contamination and/or scratching of the cell during the extrusion of the cell.

In some embodiments of the present disclosure, the pressing mechanism includes a sixth drive member and a pressing plate assembly. The sixth drive member is configured to drive the pressing plate assembly to move in the axial direction of the support mechanism, and the pressing plate assembly at least including a pressing plate configured to press the plurality of cells. By pressing the plurality of cells using the pressing plate, the plurality of cells can be pressed into the cell module. Meanwhile, a large force area of the pressing plate can prevent the plurality of cells from being damaged due to a concentrated stress during the extrusion of the plurality of cells.

In some embodiments of the present disclosure, the first support member includes a first bottom support plate and a first side support plate connected to the first bottom support plate, and the first bottom support plate and the first side support plate form an L-shaped structure. The second support member includes a second bottom support plate and a second side support plate connected to the second bottom support plate, and the second bottom support plate and the second side support plate form an L-shaped structure. By setting the first support member and/or the second support member into the L-shaped structure, and supporting bottom surfaces of the plurality of cells and positioning side surfaces of the plurality of cells by using the L-shaped structures, the plurality of cells can be ensured to be disposed in alignment in a same axial direction, ensuring the pressed cell module has a regular shape.

In another embodiment, the present disclosure provides a cell module stacking method being implemented by the stacking device according to any of above embodiments. The method includes: placing a plurality of cells on a support mechanism along the axial direction of the support mechanism wherein any two adjacent cells are spaced apart from each other; driving a pressing mechanism to move in the axial direction of the support mechanism to press the plurality of cells into the cell module, and stacking the plurality of cells into a cell module; and transferring the cell module to a tray.

In some embodiments of the present disclosure, the cell module stacking method further includes, subsequent to the stacking the plurality of cells into the cell module: driving a lifting mechanism to lift the cell module to enable a bottom surface of the cell module to leave the support mechanism; driving a retractable mechanism to keep a first support member and a second support member relatively far away from each other in such a manner that an opening size of a first opening between the first support member and the second support member is greater than a cross-sectional size of the cell module; driving the lifting mechanism to move down along with the cell module and pass through a second opening on the tray, the bottom surface of the cell module abutting against the tray, the cell module is supported by the tray; and transferring the tray loaded with the cell module to a next procedure.

Since the cell module stacking method of the present disclosure is implemented by the stacking device according to any of the above embodiments, a same technical effect can be achieved, and thus details thereof will be omitted here.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, exemplarily embodiments of the present disclosure will be described below.

### BRIEF DESCRIPTION OF THE DRAWINGS

Various other advantages and benefits will become apparent to those skilled in the art after reading the detailed description of embodiments given below. The accompanying drawings are used for a purpose of illustrating the embodiments only, rather than limiting the present disclosure. In addition, same elements are denoted by same reference numerals throughout the accompanying drawings. In the accompanying drawings:
FIG. 1 is a schematic diagram illustrating a structure of a stacking device according to an embodiment of the present disclosure.
FIG. 2 is a schematic diagram illustrating a structure of initial positions of cells stacked on a stacking device according to an embodiment of the present disclosure.
FIG. 3 is a schematic diagram illustrating a structure of a cell module obtained after stacking of cells on a stacking device according to an embodiment of the present disclosure.
FIG. 4 is a schematic diagram illustrating a structure of a stacking device viewed from another angle according to an embodiment of the present disclosure.
FIG. 5 is a schematic diagram illustrating a structure of a cell module transferred to a tray according to an embodiment of the present disclosure.
FIG. 6 is an enlarged view illustrating a part A of a stacking device according to an embodiment of the present disclosure.
FIG. 7 is an enlarged view illustrating a part B of a stacking device according to an embodiment of the present disclosure.
FIG. 8 is an enlarged view illustrating a part C of a stacking device according to an embodiment of the present disclosure.
FIG. 9 is a schematic diagram illustrating a structure of a tray according to an embodiment of the present disclosure.
FIG. 10 is an enlarged view illustrating a part D of a tray according to an embodiment of the present disclosure.
FIG. 11 is a schematic diagram illustrating a structure of a lifting mechanism according to an embodiment of the present disclosure.
FIG. 12 is a schematic diagram illustrating a structure of a brush mechanism according to an embodiment of the present disclosure.
FIG. 13 is a flowchart illustrating a stacking method according to an embodiment of the present disclosure.

Reference numerals in exemplarily embodiments are explained as follows:
1, stacking device;
10, rack;
20, support mechanism; 21, first support member; 211, first bottom support plate; 212, second side support plate; 22, second support member; 23, first opening;
30, pressing mechanism; 31, sixth drive member; 32, first slide plate; 33, pressing plate;
40, tray; 41, substrate; 42, second opening; 43, gripping assembly; 431, connection plate; 432, mounting base; 433, slide rod; 434, spring; 44, support base;
51, first drive member;
60, tray locking mechanism; 61, first locking assembly; 611, third drive member; 612, fourth drive member; 613, support plate; 62, second locking assembly; 63, locking member;
70, lifting mechanism; 71, top plate; 72, mounting plate; 73, fifth drive member; 74, guide rod; 75, side plate;
80, brush mechanism; 81, brush; 82, seventh drive member; 83, second slide plate;
2, cell;
3, cell module;
4, transferring device.

### DETAILED DESCRIPTION

Embodiments of technical solutions of the present disclosure will be described in detail below in conjunction with accompanying drawings. The following embodiments are only used to illustrate the technical solutions of the present disclosure more clearly. Therefore, the embodiments are used as examples only and should not be used to limit a protection scope of the present disclosure.

It should be noted that, unless otherwise indicated, technical terms or scientific terms used in the embodiments of the present disclosure should have a common meaning as understood by those skilled in the art to which the embodiments of the present disclosure belong.

In the description of the embodiments of the present disclosure, the orientation or position relationship indicated by the technical terms such as "center", "longitudinal", "lateral", "length", "width", "thickness", "above", "below", "front", "back", "left", "right", "vertical", "horizontal", "top", "bottom", "inner", "outer", "clockwise", "counterclockwise", "axial", "radial", and "circumference" is based on the orientation or position relationship shown in the drawings, and is only for the convenience of describing the embodiments of the present disclosure and simplifying the description, rather than indicating or implying that the pointed device or element must have a exemplarily orientation, or be constructed and operated in a exemplarily orientation, and therefore cannot be understood as a limitation of the present disclosure.

In addition, technical terms such as "first" and "second" are only used for descriptive purposes, and cannot be understood as indicating or implying relative importance or implicitly indicating the number of indicated technical features. In the description of the embodiments of the present disclosure, "plurality" means at least two, unless otherwise exemplarily defined.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the exemplarily meaning of the above-mentioned terms in the embodiments of the present disclosure can be understood according to exemplarily circumstances.

In the description of the embodiments of the present disclosure, unless otherwise expressly specified and defined, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

At present, from the perspective of the development of the market, a power battery is more and more widely used. The power battery is not only used in energy storage power systems such as hydraulic power stations, fossil-fuel power stations, wind power stations, and solar power stations, but also widely used in electric transportation vehicles such as electric bicycles, electric motorcycles, electric vehicles, and in various fields such as military equipment and aerospace.

It was found that, during production of the power battery, a cell module of the power battery is usually formed by stacking a plurality of cells. With an improvement in requirements of a modulization efficiency of the cell module, a length of the cell module is continuously lengthened. In the related art, the plurality of cells is pressed and stacked on a tray to form the cell module, and the cell module is transferred through the tray. Since the plurality of cells needs to be stacked at intervals prior to stacking, a length of the tray is increased accordingly, which in turn increases manufacturing costs of the tray and extends a length of a production line. In addition, since bottom surfaces of the plurality of cells and a surface of the tray rub against each other in a process of pressing the plurality of cells into the cell module, it is easy to cause scratches on the bottom surfaces of the plurality of cells.

To solve a problem of high manufacturing costs of the tray due to the length of the tray being too long and an amount of stretching or retraction of a spring mechanism being large, it was found that by pressing the plurality of cells on another component, forming the cell module by stacking the plurality of cells, and then transferring the cell module to the tray that is configured to transfer the cell module, the length of the tray can be effectively shortened, the amount of stretching or retraction of the spring mechanism on the tray can be decreased, and the manufacturing costs of the tray can be reduced. In addition, the scratches on the bottom surfaces of the plurality of cells caused by mutual friction between the bottom surfaces of the plurality of cells and the surface of the tray can be effectively reduced.

Based on above considerations, after in-depth research, a cell module stacking device is designed. A support mechanism is disposed in the stacking device, the plurality of cells are disposed on the support mechanism. The plurality of cells is pressed into the cell module by moving a pressing mechanism in an axial direction of the support mechanism. The cell module is transferred to a tray, and transferred to a next procedure through the tray. An extrusion process of the cell module no longer needs to be operated on the tray, which reduces the length and the manufacturing costs of the tray, and shortens the length of the production line to reduce a floor space of the stacking device, further facilitating an arrangement of other apparatuses. In addition, since the length of the tray is reduced, a transferring efficiency of the tray can be improved, which in turn improves a production efficiency.

Meanwhile, since the stacking is not carried out on the tray, the cell module only needs to be transferred to the tray for transferring, scratches caused by sliding of the cell module on the tray can be effectively prevented.

In the cell module stacking device and the cell module stacking method provided by the present disclosure, the plurality of cells can be pressed into the cell module by stacking. The cell module may be applied in any battery pack or battery, or a primary battery and a rechargeable battery. For example, the rechargeable battery includes a lithium-ion battery, a sodium-ion battery, a lithium-sulfur battery, a magnesium-ion battery, and the like. Such batteries are applicable in a variety of electrical devices that use batteries, such as mobile phones, portable devices, laptop computers, electric scooters, electric toys, electric tools, electric vehicles, ships, and spacecraft. For example, the spacecraft include airplanes, rockets, space shuttles, spaceships, and the like. The battery or battery pack is configured to provide electrical energy for the above-mentioned electrical devices.

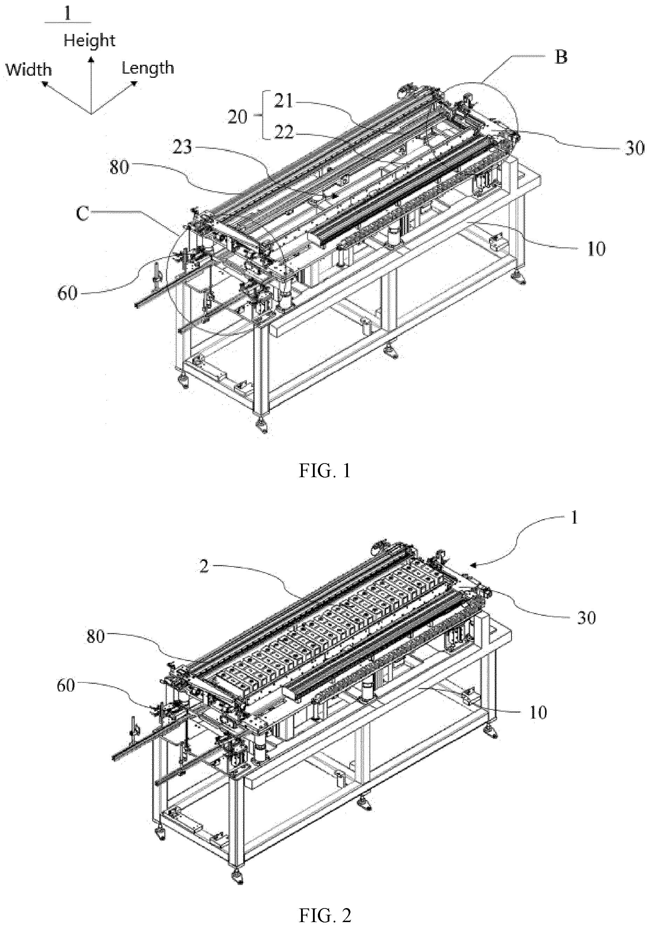

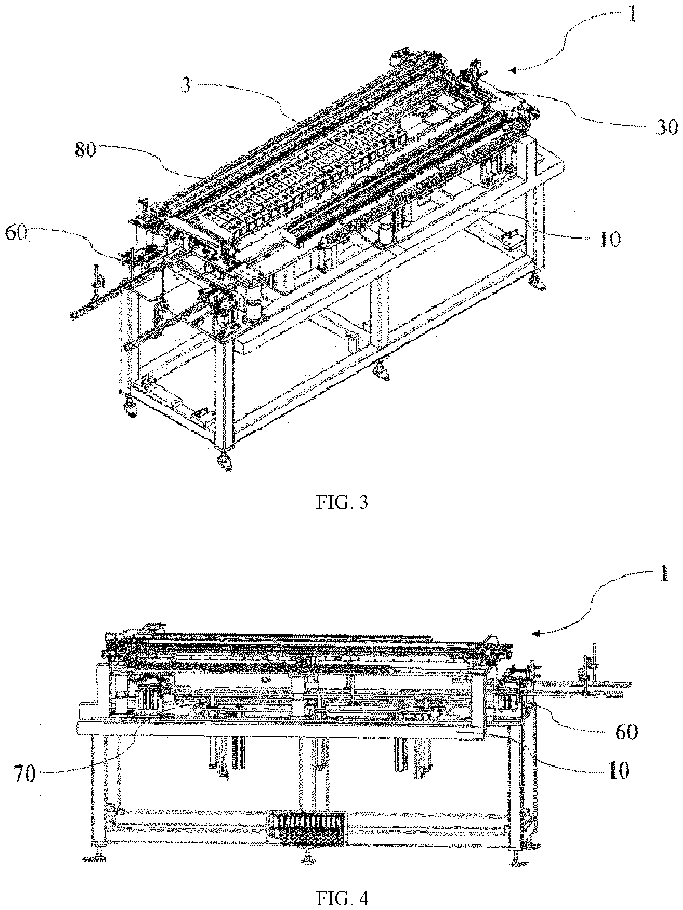

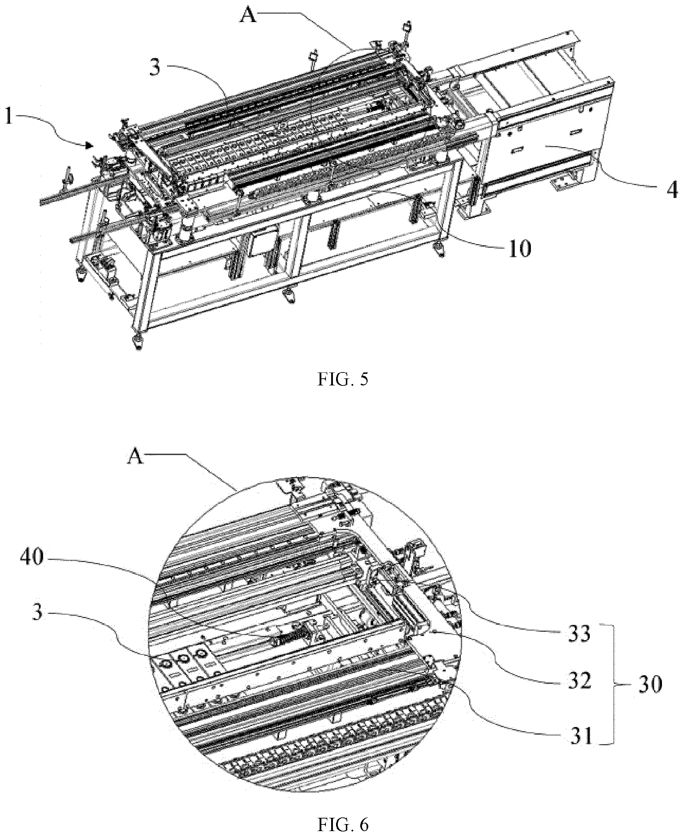

In one embodiment, a cell module stacking device is provided by the present disclosure. FIG. 1 is a schematic diagram illustrating a structure of a stacking device 1 according to an embodiment of the present disclosure. FIG. 2 is a schematic diagram illustrating a structure of initial positions of cells 2 stacked on the stacking device 1 according to an embodiment of the present disclosure. FIG. 3 is a schematic diagram illustrating a structure of a cell module 3 obtained after stacking of the cells 2 on the stacking device 1 according to an embodiment of the present disclosure. FIG. 4 is a schematic diagram illustrating a structure of the stacking device 1 viewed from another angle according to an embodiment of the present disclosure. FIG. 5 is a schematic diagram illustrating a structure of the cell module 3 transferred to a tray 40 according to an embodiment of the present disclosure. FIG. 6 is an enlarged view illustrating a part A of the stacking device 1 according to an embodiment of the present disclosure. In some embodiments of the present disclosure, as illustrated in FIG. 1 to FIG. 6, the stacking device 1 includes a rack 10, a support mechanism 20, and a pressing mechanism 30. The support mechanism 20 is configured to support a plurality of cells 2. The pressing mechanism 30 is connected to the rack 10. A part of the pressing mechanism 30 is movable in an axial direction of the support mechanism 20. The pressing mechanism 30 is configured to press the plurality of cells 2 into the cell module 3. A tray 40 is disposed on the rack 10 in such a manner that the tray is movable relative to the rack 10 and is configured to support the cell module 3.

In a further embodiment, the stacking device 1 is applied in a production process of the cell module 3, can be configured to stack the plurality of cells 2 together through an extrusion, and forms the cell module 3. The rack 10 forms a basic structure of the stacking device 1 and is configured to support the entire stacking device 1. Other structural members of the stacking device 1 may be disposed on the rack 10. The support mechanism 20 is configured to support the plurality of cells 2, enabling the extrusion of the plurality of cells 2 to be completed on the support mechanism 20. The pressing mechanism 30 can be configured to provide a pressing force to tightly press the plurality of cells 2. In this way, the plurality of cells 2 are stacked together under an action of the pressing force of the pressing mechanism 30 and is formed as the cell module 3. The axial direction of the support mechanism 20 is an extension direction of the support mechanism 20, i.e., a length direction of the stacking device as illustrated in FIG. 1. In the present disclosure, the cell 2 further refers to a cell unit, and the cell module 3 further refers to a battery module. The cell unit is the smallest unit that forms the battery module or the battery pack. The battery module may include a plurality of cell units. The plurality of cell units may be connected in series or in parallel or in series and parallel to form the battery module, and then a plurality of battery modules is connected in series or in parallel or in series and parallel to form a battery. In some embodiments of the present disclosure, the plurality of cells 2 is stacked on the support mechanism 20 in the length direction of the stacking device 1. After the stacking process, large surfaces of any two adjacent cells 2 in the cell module 3 obtained are contacted. A length direction of a single cell 2 for forming the cell module 3 is perpendicular to the length direction of the stacking device 1. A width direction of the cell 2 is parallel to the length direction of the stacking device 1. A height direction of the cell 2 is parallel to a height direction of the stacking device 1. A contour size of the cell 2 in the length direction is greater than a contour size of the cell 2 in the width direction. The tray 40 has a disk-shaped structure. The tray 40 is configured to carry the cell module 3, and is movable relative to the rack 10, so that the cell module 3 is transferred to the next procedure.

In a technical solution of the present disclosure, since the support mechanism 20 is provided, the plurality of cells 2 is disposed on the support mechanism 20. The plurality of cells 2 are pressed into the cell module 3 through the movement of the pressing mechanism 30 in the axial direction of the support mechanism 20. The cell module 3 is transferred to the tray 40, and transferred to the next procedure through the tray 40. An extrusion process of the cell module 3 no longer needs to be operated on the tray 40, which reduces the length and the manufacturing costs of the tray 40, and shortens the length of the production line to reduce the floor space of the stacking device 1, further facilitating the arrangement of other apparatuses.

Meanwhile, since the stacking is not carried out on the tray 40 and the cell module 3 only needs to be transferred to the tray 40 for transferring, scratches caused by sliding of the cell module 3 on the tray 40 can be effectively prevented.

In some embodiments of the present disclosure, as illustrated in FIG. 1 to FIG. 3, the support mechanism 20 includes a first support member 21 and a second support member 22 that are arranged in parallel. Each of the first support member 21 and the second support member 22 are connected to the rack 10 in a relatively slidable manner and configured to slide in a direction perpendicular to the axial direction of the support mechanism 20. The first support member 21 and the second support member 22 are relatively close to each other or relatively far away from each other.

In a further embodiment, the first support member 21 and the second support member 22 are configured to support the cell 2 at two sides of the cell 2, respectively. The first support member 21 and the second support member 22 together form the support mechanism. To ensure that the first support member 21 and the second support member 22 can simultaneously support the plurality of cells 3, the first support member 21 and the second support member 22 are disposed parallel to each other. A direction perpendicular to the axial direction of the support mechanism 20 is a width direction of the stacking device 1.

The first support member 21 and the second support member 22 each are connected to the rack 10 in a relatively slidable manner. When the cell 2 has a large length, the first support member 21 and the second support member 22 can be controlled to be relatively far away from each other, to increase a space between the first support member 21 and the second support member 22, thereby allowing the cell 2 having a large length to be supported. When the cell 2 has a small length, the first support member 21 and the second support member 22 can be controlled to be relatively close to each other, to decrease the space between the first support member 21 and the second support member 22, thereby allowing the cell 2 having the smaller length to be supported. The space between the first support member 21 and the second support member 22 can be adjusted based on the length of the cell 2 to support cells 2 of different lengths.

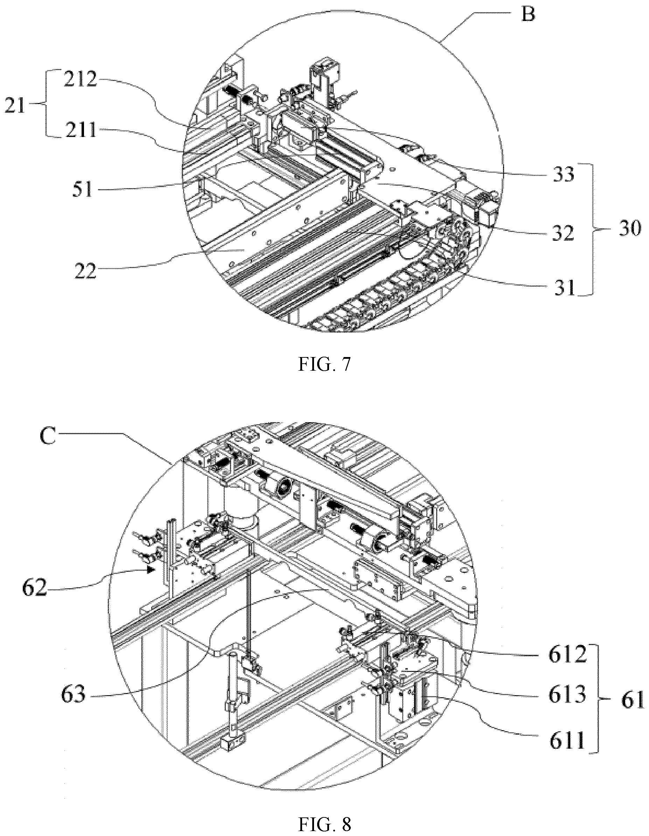

FIG. 7 is an enlarged view illustrating a part B of the stacking device 1 according to an embodiment of the present disclosure. In some embodiments of the present disclosure, as illustrated in FIG. 1, FIG. 2, and FIG. 7, the stacking device 1 further includes a retractable mechanism connected to the rack 10. The first support member 21 and the second support member 22 each are connected to the retractable mechanism and are relatively close to each other or relatively far away from each other under an action of the retractable mechanism.

In a further embodiment, the retractable mechanism is capable of reciprocating in the width direction of the stacking device 1. Drive ends of the retractable mechanism are connected to the first support member 21 and the second support member 22 respectively, to drive the first support member 21 and the second support member 22 to move relatively close to each other or relatively far away from each other.

Since the retractable mechanism is configured to control the first support member 21 and the second support member 22 to move relatively close to each other or relatively far away from each other, an automation degree of the stacking device 1 can be effectively improved.

In some embodiments of the present disclosure, as illustrated in FIG. 1, FIG. 2, and FIG. 7, the retractable mechanism includes a first drive member 51 and a second drive member (not illustrated in the drawings). The first drive member 51 is connected to the first support member 21 in a driving manner. The second drive member is connected to the second support member 22 in a driving manner.

In a further embodiment, a drive end of the first drive member 51 is connected to the first support member 21 and is configured to drive the first support member 21 to move close to or far away from the second support member 22, and a drive end of the second drive member is connected to the second support member 22 and is configured to drive the second support member 22 to move close to or far away from the first support member 21. In some embodiments of the present disclosure, the first drive member 51 and the second drive member are disposed on two ends of the rack 10 in a length direction, respectively, thereby effectively utilizing a space on the rack 10. Each of the first drive member 51 and the second drive member may be a drive cylinder.

By controlling the first support member 21 and the second support member 22 through the first drive member 51 and the second drive member, respectively, the automation degree of the stacking device 1 can be further improved, and cells 2 having asymmetric structures can be supported to enable a center of a battery having an asymmetric structure to coincide with a center of the rack 10.

In some embodiments of the present disclosure, the retractable mechanism may further be configured as only one drive member. Drive ends are disposed on two sides of the drive member respectively. The drive ends on the two sides are connected to the first support member 21 and the second support member 22, respectively, to drive, by the one drive member, the first support member 21 and the second support member 22 to move simultaneously, ensuring a synchronization of movements of the first support member 21 and the second support member 22.

In some embodiments of the present disclosure, as illustrated in FIG. 1 to FIG. 6, the tray 40 is disposed on the rack 10 in a relatively slidable manner. The tray 40 is configured to slide to a position below the support mechanism 20 and exactly face towards a first opening 23 formed by the first support member 21 and the second support member 22 when the first support member 21 and the second support member 22 are spaced apart from each other.

In a further embodiment, the tray 40 may be disposed below the support mechanism 20 during sliding. A plurality of rotation drums may be arranged at intervals on the rack 10. The tray 40 is disposed on the plurality of rotation drums. With rotations of the plurality of rotation drums, the tray 40 can slide relative to the rack 10 in a rotation direction of the plurality of rotation drums. When the plurality of cells 2 is pressed into the cell module 3 by stacking, the cell module 3 needs to be transferred to the tray 40. At this time, the first support member 21 and the second support member 22 are controlled to move relatively far away from each other, the first opening 23 is formed between the first support member 21 and the second support member 22, and a size of the first opening 23 is greater than a cross-sectional size of the cell module 3. In this way, the cell module 3 is placed, via the first opening 23, on the tray 40 exactly facing towards the first opening 23, thereby completing the transferring of the cell module 3.

In some embodiments of the present disclosure, the tray 40 is slidable in the length direction of the stacking device 1 to facilitate an arrangement of the tray 40 and the transferring of the cell module 3.

Since the cell module 3 only needs to be controlled to move in a height direction of the rack 10 during moving the cell module 3 to the tray 40, no large-scale movement or rotation of the cell module 3 is required, facilitating the transferring of the cell module 3 to the tray 4 below the support mechanism 20. Thus, the cell module 3 is transferred to the next procedure through the tray 40. In addition, a space occupancy rate during the transfer of the cell module 3 can be reduced to further decrease a space occupancy rate of the stacking device 1, which facilitates an arrangement of other apparatuses.

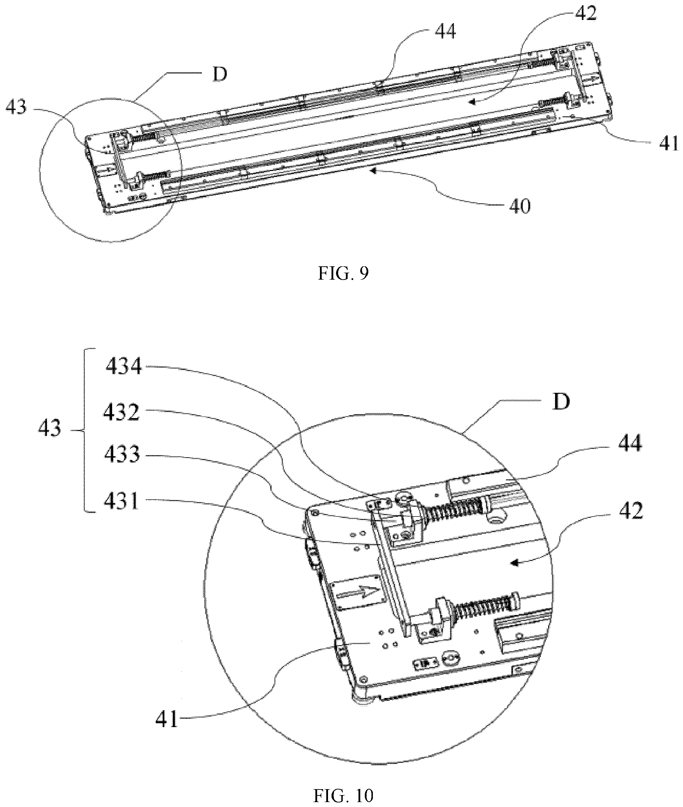

FIG. 8 is an enlarged view illustrating a part C of the stacking device 1 according to an embodiment of the present disclosure. FIG. 9 is a schematic diagram illustrating a structure of the tray 40 according to an embodiment of the present disclosure. In some embodiments of the present disclosure, as illustrated in FIG. 1, FIG. 3, FIG. 8, and FIG. 9, the stacking device 1 further includes at least one tray locking mechanism 60. The tray 40 is provided with at least one gripping assembly 43 disposed thereon. The at least one tray locking mechanism 60 is detachably connected to the at least one gripping assembly 43 and is configured to drive the at least one gripping assembly 43 to move which enables the at least one gripping assembly 43 to grip or release the cell module 3 on the tray 40.

In a further embodiment, the gripping assembly 43 is disposed on the tray 40 and is configured to grip and fix the cell module 3 transferred to the tray 40, to prevent the cell module 3 from falling during a transfer of the tray 40. During a movement of the tray 40, the gripping assembly 43 on the tray 40 may be connected to the tray locking mechanism 60, to drive a movement of the gripping assembly 43 through the tray locking mechanism 60. In an embodiment of the present disclosure, one tray locking mechanism 60 is disposed on each of two ends of the rack 10 in the length direction. Correspondingly, one gripping assembly 43 is further disposed on each of two ends of the tray 40 in a length direction. Thus, the tray locking mechanisms 60 on the two ends are configured to drive the gripping assemblies 43, respectively, to move, to grip and fix the cell module 3 on the tray 40 together. The length direction of the rack 10 and the length direction of the tray 40 coincide with the length direction of the stacking device 1.

By connecting the at least one tray locking mechanism 60 to the at least one gripping assembly 43 on the tray 40, movements of the at least one gripping assembly 43 can be controlled to tightly grip the cell module 3 on the tray 40, which allows a position of the cell module 3 relative to the tray 40 to be fixed. In this way, the cell module 3 is transferred to the next procedure through the tray 40, avoiding falling of the cell module 3 during transferring.

FIG. 10 is an enlarged view illustrating a part D of the tray 40 according to an embodiment of the present disclosure. In some embodiments of the present disclosure, as illustrated in FIG. 1, FIG. 2, FIG. 3, FIG. 8, FIG. 9, and FIG. 10, the tray locking mechanism 60 includes a third drive member 611, a fourth drive member 612, and a locking member 63. The locking member 63 is configured to be connected to the at least one gripping assembly 43, moves in a vertical direction under driving of the third drive member 611, and drives the at least one gripping assembly 43 to move together in the length direction of the stacking device 1 under an action of the fourth drive member 612.

In a further embodiment, a drive end of the third drive member 611 is connected to the fourth drive member 612, or is connected to the fourth drive member 612 by a connection member. The drive end of the third drive member 611 is configured to drive the fourth drive member 612 to move in the vertical direction, i.e., in the height direction of the stacking device 1. A drive end of the fourth drive member 612 is connected to the locking member 63 and is configured to drive the locking member 63 to move in the length direction of the stacking device 1. The locking member 63 is configured to be connected to and fix the gripping assembly 43, to drive the gripping assembly 43 to move in the length direction of the stacking device 1 along with the locking member 63. Each of the third drive member 611 and the fourth drive member 612 may be a drive cylinder.

In some embodiments of the present disclosure, the tray 40 includes a substrate 41. One gripping assembly 43 is disposed at each of two ends of the substrate 41 in a length direction. The gripping assembly 43 includes a connection plate 431, mounting bases 432, slide rods 433, and springs 434. Two mounting bases 432 are spaced apart on a surface of the substrate 41. Each of the two mounting bases 432 is provided with one slide rod 433 passing through the same. The slide rod 433 is movable in the length direction of the tray 40. One end of the slide rod 433 adjacent to an outer side edge of the substrate 41 is connected to the connection plate 431, and thus the slide rod 433 is driven, by the connection plate 431, to move along with the connection plate 431. The spring 434 is disposed between another end of the slide rod 433 and the mounting base 432, and is compressed during a movement of the slide rod 434 towards an outer side of the substrate 41.

The tray locking mechanism 60 includes a first locking assembly 61, a second locking assembly 62, and a locking member 63. The second locking assembly 62 has a same structure as the first locking assembly 61. For convenience of description, the present disclosure only takes the first locking assembly 61 as an example for illustration. The first locking assembly 61 includes the third drive member 611, the fourth drive member 612, and a support plate 613. The third drive member 611 is disposed on the rack 10. The drive end of the third drive member 611 is connected to the support plate 613. The fourth drive member 612 is disposed on the support plate 613. The drive end of the fourth drive member 612 is connected to the locking member 63. When the drive end of the third drive member 611 moves, the fourth drive member 612 and the locking member 63 may be driven to move together in the height direction of the stacking device 1. When the drive end of the fourth drive member 62 moves, the locking member 63 may be driven to move in the length direction of the stacking device 1. The locking member 63 has an elongated plate structure having an opening. When the locking member 63 is connected to the gripping assembly 43, the opening on the locking member 63 is arranged just around the two slide rods 433 on the connection plate 431. During a movement of the locking member 63 towards an outer side of the tray 40, the locking member 63 may be abutted against the connection plate 431, and drive the connection plate 431 and the slide rod 433 to move together towards the outer side of the tray 41.

When the plurality of cells 2 is pressed into the cell module 3 by stacking, the cell module 3 needs to be transferred to the tray 40. The third drive member 611 is configured to drive the locking member 63 to move upwardly. In this way, an avoidance space is provided for the tray 40 to move in the length direction of the stacking device 1. The tray 40 is moved from a position below the locking member 63 at one end to the position below the support mechanism 20, and exactly faces towards the first opening 23. In this case, the locking member 63 is driven by the third drive member 611 to move downwardly and is sleeved on the slide rod 433. The fourth drive member 612 is configured to drive the locking member 63 to move away from the tray 40. During a movement of the locking member 63, the locking member 63 is abutted against the connection plate 431 and drives the connection plate 431 to move away from the tray 40 along with the locking member 63, which increases a space between the slide rods 433 at the two ends of the tray 40, enabling the cell module 3 to be transferred to the tray 40 through the first opening 23. After the cell module 3 is transferred to the tray 40, the locking member 63 is driven by the fourth drive member 612 to move towards a center of the tray 40, and finally the slide rods 433 on the two ends are abutted against two sides of the cell module 3. In this case, since the spring 434 still has elasticity due to a deformation, the cell module 3 is pressed by the springs 434 and the slide rods 433 on the two sides of the cell module 3 together, enabling the cell module 3 to be fixed on the tray 40. Since the extrusion of the plurality of cells 3 no longer needs to be performed on the tray 40, a size of the tray 40 can be appropriately reduced. Also, since the gripping assembly 43 is configured to fix the cell module 3 only, a displacement amount of the slide rod 433 on the gripping assembly 43 and the amount of stretching or retraction of the spring 434 on the gripping assembly 43 can also be appropriately reduced, further reducing the manufacturing costs of the tray 40.

Since the third drive member 611 configured to drive the locking member 63 to move in the vertical direction, the locking member 63 can be avoided during the movement of the tray 40, to prevent the locking member 63 from interfering with the tray 40 and affecting a normal movement process of the tray 40. Since the fourth drive member 612 configured to drive the locking member 63 that drives the gripping assembly 43 to move in the length direction of the stacking device 1 along with the locking member 63, the cell module 3 can be smoothly placed on the tray 40 and fixedly gripped by the gripping assembly 43, thereby allowing the position of the cell module 3 relative to the tray 40 to be fixed.

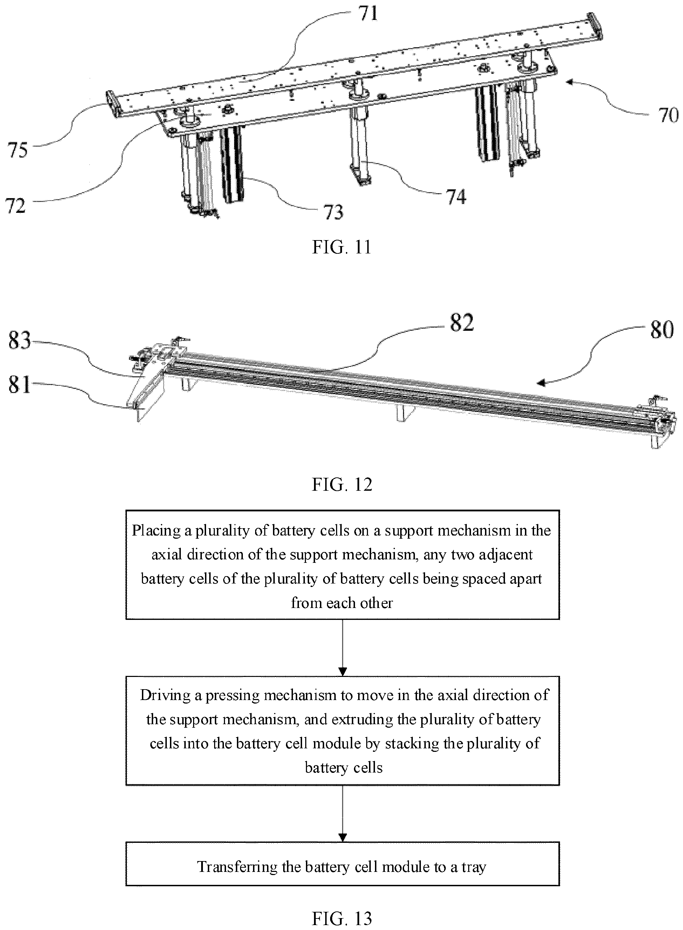

FIG. 11 is a schematic diagram illustrating a structure of a lifting mechanism 70 according to an embodiment of the present disclosure. In some embodiments of the present disclosure, as illustrated in FIG. 1, FIG. 3, FIG. 9, and FIG. 11, the stacking device 1 further includes the lifting mechanism 70 connected to the rack 10. The lifting mechanism 70 at least includes a top plate 71 being capable of moving up and down. The tray 40 has a second opening 42 passing through the tray 40. The top plate 71 is abutted against the cell module 3 by passing through the second opening 42 and the first opening 23 sequentially.

In a further embodiment, the top plate 71 has a flat plate-like structure and may move up and down in the height direction of the stacking device 1. In this way, the top plate 71 can be used to support the cell module 3 and drive the cell module 3 to move up and down in the height direction of the stacking device 1 along with the top plate 71.

After the extrusion of the plurality of cells 2 into the cell module 3, the top plate 71 of the lifting mechanism 70 is controlled to be abutted against a bottom surface of the cell module 3 by passing through the second opening 42 and the first opening 23 sequentially, to support the cell module 3 through the top plate 71. The first support member 21 and the second support member 22 are controlled to be relatively far away from each other to expand the first opening 23. The top plate 71 is then controlled to move down and drive the cell module 3 to pass through the first opening 23 along with the top plate 71. Thus, the cell module 3 is placed on and supported by the tray 40, which facilitates the transferring of the cell module 3.

In some embodiments of the present disclosure, as illustrated in FIG. 1, FIG. 3, FIG. 9, and FIG. 11, in the axial direction of the support mechanism 20, a length of the top plate 71 is smaller than a length of the second opening 42 and greater than a length of the cell module 3.

In a further embodiment, the second opening 42 is formed at a center position of the substrate 41 of the tray 40, to facilitate the top plate 71 to pass through the second opening 42. In this way, the top plate 71 can support the cell module 3 and transfer the cell module 3 to the tray 40. A length direction of the second opening 42 coincides with the length direction of the stacking device 1.

In some embodiments of the present disclosure, a support base 44 is further disposed at each of two sides of the second opening 42 on the substrate 41 in a width direction. The support base 44 is also an L-shaped mechanism. The cell module 3 is supported by the support bases 44 at the two sides of the second opening 42 together. When a size of an opening between two support bases 44 is greater than a size of an opening on the substrate 41, a movement of the top plate 71 is restricted by the size of the opening on the substrate 41. In this case, the opening on the substrate 41 is the second opening 42. When the size of the opening between the two support bases 44 is smaller than the size of the opening on the substrate 41, the movement of the top plate 71 is restricted by the size of the opening between the two support bases 44. In this case, the opening between the two support bases 44 is the second opening 42.

Setting the length of the top plate 71 to be smaller than the length of the second opening 42 can ensure that the top plate 71 passes through the second opening 42 smoothly during lifting and lowering of the top plate 71. Setting the length of the top plate 71 to be greater than the length of the cell module 3 can ensure that the cell module 3 is entirely supported within the length of the cell module 3, preventing the falling of the cell module 3 during transferring the cell module 3 to the tray 40 due to a lack of support underneath the cell module 3.

In some embodiments of the present disclosure, as illustrated in FIG. 1, FIG. 3, FIG. 9, and FIG. 11, in the direction perpendicular to the axial direction of the support mechanism 20, a width of the second opening 42 is smaller than a width of the cell module 3.

In a further embodiment, the width direction of the second opening 42 coincides with the width direction of the stacking device 1.

Since the length of the top plate 71 is smaller than the length of the second opening 42 and greater than the length of the cell module 3, the length of the cell module 3 is smaller than the length of the second opening 42. By setting the width of the second opening 42 to be smaller than the width of the cell module 3, a part of a structure at each of the two sides of the second opening 42 in the width direction can support the cell module 3, and thus the cell module 3 can be effectively prevented from falling through the second opening 42.

In some embodiments of the present disclosure, as illustrated in FIG. 1, FIG. 3, FIG. 9, and FIG. 11, the lifting mechanism 70 further includes a mounting plate 72 and a fifth drive member 73. The mounting plate 72 is connected to the rack 10. The fifth drive member 73 is fixed to the mounting plate 72, is connected to the top plate 71, and is configured to drive the top plate 71 to move up and down.

In a further embodiment, the mounting plate 72 is configured to fix the entire lifting mechanism 70 to the rack 10. The fifth drive member 73 is fixed to the mounting plate 72. A drive end of the fifth drive member 73 is connected to the top plate 71 and is configured to drive the top plate 71, thereby driving the top plate 71 to move in the height direction of the stacking device 1. The fifth drive member 73 is a drive cylinder.

In some embodiments of the present disclosure, the lifting mechanism 70 includes the top plate 71, the mounting plate 72, the fifth drive member 73, and a guide rod 74. The mounting plate 72 is connected to the rack 10 to fix the entire lifting mechanism70 on the rack 10. The fifth drive member 73 is mounted on the mounting plate 72. The drive end of the fifth drive member 73 penetrates the mounting plate 72 and is connected to the top plate 71 (the accompanying drawings do not illustrate that the drive end is entirely connected to the top plate 71) and is configured to drive the top plate 71 to reciprocate in the height direction of the stacking device 1. The guide rod 74 can be stretched or retracted along its own axis. One end of the guide rod 74 is fixed to the rack 10. Another end of the guide rod 74 is connected to the top plate 71 by penetrating the mounting plate 72, to ensure a linear movement of the top plate 71. Further, a side plate 75 may be disposed on each of two sides of the top plate 71. A size of a space between the side plates 75 on the two sides of the top plate 71 is slightly greater than the length of the cell module 3. Thus, when the cell module 3 is placed on the top plate 71 between the side plates 75 on the two sides of the top plate 71, the side plates 75 can prevent the cell module 3 from falling from the top plate 71.

The lifting mechanism 70 is fixed to the rack 10 through the mounting plate 72, and the top plate 71 is driven by the fifth drive member 73 to move up and down, which can effectively support the cell module 3 and transfer the cell module 3 to the tray 40.

FIG. 12 is a schematic diagram illustrating a structure of a brush mechanism 80 according to an embodiment of the present disclosure. In some embodiments of the present disclosure, as illustrated in FIG. 1, FIG. 2, FIG. 3, and FIG. 12, the stacking device 1 further includes a brush mechanism 80. The brush mechanism 80 at least includes a brush 81. The brush is capable of moving in the axial direction of the support mechanism 20 and configured to clean the support mechanism 20.

In a further embodiment, the brush 81 is a flexible member that can provide cleaning. The brush 81 is movable in the length direction of the stacking device 1, to clean surfaces of the first support member 71 and the second support member 72, preventing impurities or dust from adhering to the surfaces of the first support member 71 and the second support member 72, and avoiding scratches on a surface of the support mechanism 20.

In some embodiments of the present disclosure, the brush mechanism 81 further includes a seventh drive member 82. The seventh drive member 82 may be a servo electric cylinder. The seventh drive member 82 is mounted on the rack 10. A second slide plate 83 is disposed on the seventh drive member 82. The brush 81 is disposed on the second slide plate 83. Under a drive action of the seventh drive member 82, the second slide plate 83 is configured to drive the brush 81 to move in an axial direction of the seventh drive member 82, i.e., in the length direction of the stacking device 1, along with the second slide plate 83, thereby cleaning the surfaces of the first support member 21 and the second support member 22.

By providing the brush 81 and moving the brush 81 in the axial direction of the support mechanism 20, the surface of the support mechanism 20 can be effectively cleaned to remove dust or particles on the support mechanism 20, preventing contamination and scratching of the cell 2 during the extrusion of the cell 2.

In some embodiments of the present disclosure, as illustrated in FIG. 1, FIG. 2, FIG. 3, FIG. 6, and FIG. 7, the pressing mechanism 30 includes a sixth drive member 31 and a pressing plate assembly. The sixth drive member 31 is configured to drive the pressing plate assembly to move in the axial direction of the support mechanism 20. The pressing plate assembly at least includes a pressing plate 33 configured to press the cell 2.

In a further embodiment, the pressing plate 33 has a plate structure having a large surface. The large surface of the pressing plate 33 is attached to the cell 2 and is configured to press the cell 2. The sixth drive member 31 can be configured to drive the pressing plate 33 to move in the length direction of the stacking device 1, to press the plurality of cells 2 into the cell module 3 by stacking. The sixth drive member 31 may be a servo electric cylinder.

In some embodiments of the present disclosure, the pressing mechanism 30 includes the sixth drive member 31, a first slide plate 32, and the pressing plate 33. The sixth drive member 31 is mounted on the rack 10. The first slide plate 32 is disposed on the sixth drive member 31. The pressing plate 33 is connected to the first slide plate 32. Under a drive action of the sixth drive member 31, the first slide plate 32 can drive the pressing plate 33 to move in an axial direction of the sixth drive member 31, i.e., in the length direction of the stacking device 1, along with the first slide plate 32, thereby pressing the plurality of cells 2 into the cell module 3 by stacking. Further, an elastic layer may be disposed on a surface of the pressing plate 33 exactly facing towards the cell module 3, such as rubber. Thus, in a process of pressing the cell 2 by the pressing plate 33, concentration of a stress can be further reduced to avoid deformations of or damages to the cell 2.

By pressing the plurality of cells 2 through the pressing plate 33, the plurality of cells 2 can be pressed into the cell module 3. Also, a large force area of the pressing plate 33 can prevent the plurality of cells 2 from being damaged due to a concentrated stress during the extrusion of the plurality of cells 2.

In some embodiments of the present disclosure, as illustrated in FIG. 1, FIG. 2, FIG. 3, and FIG. 7, the first support member 21 includes a first bottom support plate 211 and a first side support plate 212 connected to the first bottom support plate 211, the first bottom support plate 211 and the first side support plate 212 forming an L-shaped structure. The second support member 22 includes a second bottom support plate and a second side support plate connected to the second bottom support plate, the second bottom support plate and the second side support plate forming an L-shaped structure.

In a further embodiment, as an example, the first support member 21 includes the first bottom support plate 211 and the first side support plate 212. The first bottom support plate 211 is disposed in a horizontal direction and is configured to support the cell 2 from a bottom of the cell 2. The first side support plate 212 is disposed in the vertical direction and is configured to support the cell 2 from a side of the cell 2, stably supporting the cell 2 and the cell module 3 by the L-shaped structure and preventing the cell module 3 from moving between the first support member 21 and the second support member 22.

By setting the first support member 21 and/or the second support member 22 into the L-shaped structure, and supporting bottom surfaces of the plurality of cells 2 and positioning side surfaces of the plurality of cells 2 by the L-shaped structure, the plurality of cells 2 can be ensured to be disposed in alignment in a same axial direction, ensuring that the cell module 3 obtained after the extrusion has a regular shape.

In another embodiment, a cell module stacking method is provided by the present disclosure. FIG. 13 is a flowchart illustrating a cell module stacking method according to an embodiment of the present disclosure. As illustrated in FIG. 1 to FIG. 6 and FIG. 13, in some embodiments of the present disclosure, the method is implemented by the stacking device 1 according to any of the above embodiments, and includes: placing a plurality of cells 2 on the support mechanism 20 in the axial direction of the support mechanism 20, any two adjacent cells 2 is spaced apart from each other; driving the pressing mechanism 30 to move in the axial direction of the support mechanism 20 to press the plurality of cells 2 into the cell module 3, and stacking the plurality of cells 2 into a cell module 3; and transferring the cell module 3 to the tray 40.

A connection relationship and an operation process between the support mechanism 20, the pressing mechanism 30, the tray 40, and the cell 2 have been disclosed in the above description of the stacking device 1, and thus details thereof will be omitted here.

Since the cell module stacking method of the present disclosure is implemented by the stacking device 1 according to any of the above embodiments, a same technical effect can be achieved, and thus details thereof will be omitted here.

In some embodiments of the present disclosure, as illustrated in FIG. 1 to FIG. 9, the method further include, after the step of pressing the plurality of cells into the cell module 3 by stacking the plurality of cells 2: driving the lifting mechanism 70 to lift the cell module 3 to enable the bottom surface of the cell module 3 to leave the support mechanism 20; driving a retractable mechanism to keep the first support member 21 and the second support member 22 relatively far away from each other, in such a manner that an opening size of a first opening 23 between the first support member 21 and the second support member 22 is greater than a cross-sectional size of the cell module 3; driving the lifting mechanism 70 to move down along with the cell module 3 and pass through a second opening 42 on the tray 40, the bottom surface of the cell module 3 abutting against the tray 40, the cell module 3 is supported by the tray 40; and transferring the tray 40 loaded with the cell module 3 to the next procedure.

In a further embodiment, the top plate 71 is driven by the fifth drive member 73 to move upwardly in the height direction of the stacking device 1, and is abutted against the bottom surface of the cell module 3 to further drive the top plate 71 to move upwardly, disengaging the cell module 3 from support of the support mechanism 20. To facilitate the top plate 71 to drive a downward movement of the cell module 3 along with the top plate 71 and pass through the first opening 23, the first support member 21 and the second support member 22 are driven away from each other by the retractable mechanism to enlarge an area of the first opening 23, which in turn enables the top plate 71 to drive the downward movement of the cell module 3 along with the top plate 71 and pass through the first opening 23. The top plate 71 is further driven to move downwardly and pass through the second opening 42. The bottom surface of the cell module 3 is abutted against the tray 40 after passage of the top plate 71 through the second opening 42. The cell module 3 is supported by the tray 40 to transfer the cell module 3 from the support mechanism 20 to the tray 40. The tray 40 is driven to move in the length direction of the stacking device 1, and is then moved to a transferring device 4. The tray 40 and the cell module 3 are transferred to the next procedure by the transferring device 4.

The cell module stacking method of the present disclosure further includes the following steps.

The gripping assembly 43 of the tray 40 is driven by the tray locking mechanism 60 to move towards the outer side of the tray 40, to place the cell module 3 on the tray 40. The gripping assembly 43 is driven by the tray locking mechanism 60 to move towards the center of the tray 40. The cell module 3 is gripped and fixed by the spring 434 and the slide rod 433, which fixes the cell module 3 to the tray 40, and thus the cell module 3 is transferred through the tray 40. A connection relationship and a control process between the tray locking mechanism 60 and the gripping assembly 43 have been disclosed in the above description of the stacking device 1, and thus details thereof will be omitted here.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, exemplarily embodiments of the present disclosure will be described below.

In one embodiment of the present disclosure, the stacking device 1 includes the rack 10. The support mechanism 20 is disposed above the rack 10, and includes the first support member 21 and the second support member 22 that are arranged opposite to each other. The first support member 21 and the second support member 22 both have the L-shaped structures. The first support member 21 is connected to the first drive member 51. The second support member 22 is connected to the second drive member. Under the control of the first drive member 51 and the second drive member, the first support member 21 and the second support member 22 may be relatively close to each other or relatively far away from each other. The first opening 23 is formed between the first support member 21 and the second support member 22. Two ends of the bottom of the plurality of cells 2 are disposed on the first support member 21 and the second support member 22, respectively. The pressing mechanism 30 is further disposed above the rack 10, and includes the sixth drive member 31, the first slide plate 32, and the pressing plate 33. The sixth drive member 31 is connected to the rack 10. The first slide plate 32 can drive the pressing plate 33 to move in the length direction of the stacking device 1 along with the first slide plate 32, to press the plurality of cells 2 into the cell module 3 by the pressing plate 33. Further, the slidable tray 40 is disposed below the support mechanism 20. The second opening 42 is formed on the tray 40. The stacking device 1 further includes the lifting mechanism 70. The lifting mechanism 70 includes the top plate 71, the mounting plate 72, the fifth drive member 73, and the guide rod 74. The mounting plate 72 is connected to the rack 10. The fifth drive member 73 is disposed on the mounting plate 72. The top plate 71 is configured to move up and down in the height direction of the stacking device 1 under a drive action of the fifth drive member 73. In this way, the top plate 71 passes through the first opening 23 and the second opening 42, and then the cell module 3 on the support mechanism 20 is transferred to the tray 40. The stacking device 1 further includes the tray locking mechanism 60. The tray locking mechanism 60 includes the first locking assembly 61 and the second locking assembly 62. The locking member 63 is disposed between the first locking assembly 61 and the second locking assembly 62. The second locking assembly 62 has the same structure as the first locking assembly 61. The first locking assembly 61 includes the third drive member 611, the fourth drive member 612, and the support plate 613. The drive end of the third drive member 611 is connected to the support plate 613 and is configured to drive the support plate 613 to move up and down in the height direction of the stacking device 1. The fourth drive member 612 is disposed on the support plate 613. The drive end of the fourth drive member 612 is connected to the locking member 63 and is configured to drive the locking member 63 to move in the length direction of the stacking device 1. The tray 40 further includes the substrate 41 and the gripping assembly 43 disposed on the substrate 41. The gripping assembly 43 includes the connection plate 431, the mounting base 432, the slide rod 433, and the spring 434. The two mounting bases 432 are spaced apart on the surface of the substrate 41. Each of the two mounting bases 432 are provided with one slide rod 433 passing through the same. The slide rod 433 is movable in the axial direction of the tray 40. One end of the slide rod 433 adjacent to the outer side edge of the substrate 41 is connected to the connection plate 431. The spring 434 is disposed between the other end of the slide rod 433 and the mounting base 432, and is compressed during the movement of the slide rod 433 towards the outer side direction of the substrate 41. The locking member 63 is arranged around the slide rod 433 and is abutted against the connection plate 431 under drive of the fourth drive member 612, thereby driving the connection plate 431 and the slide rod 433 to move together. The rack 10 is further provided with the brush mechanism 80. The brush mechanism 80 includes the seventh drive member 82 mounted on the rack 10. The second slide plate 83 is disposed on the seventh drive member 82. The brush 81 is disposed on the second slide plate 83. Under the drive action of the seventh drive member 82, the second slide plate 83 is configured to drive the brush 81 to move in the length direction of the stacking device 1 along with the second slide plate 83, thereby cleaning the surfaces of the first support member 21 and the second support member 22.

In some embodiments of the present disclosure, the cell module stacking method includes: driving the brush mechanism 80 to clean the surface of the support mechanism 20; placing the plurality of cells 2 on the first support member 21 and the second support member 22 of the support mechanism 20 in the axial direction of the support mechanism 20, any two adjacent cells of the plurality of cells 2 is spaced from each other; driving the pressing mechanism 30 to move in the axial direction of the support mechanism 20, and pressing the plurality of cells 2 into the cell module 3 by stacking the plurality of cells 2; driving the lifting mechanism 70 to lift the cell module 3 to enable the bottom surface of the cell module 3 to leave the support mechanism 20; driving a retractable mechanism to keep the first support member 21 and the second support member 22 relatively far away from each other, in such a manner that an opening size 23 of a first opening between the first support member 21 and the second support member 22 is greater than a cross-sectional size of the cell module 3; driving the tray locking mechanism 60 to move the gripping assembly 43 towards the outer side of the tray 40; driving the lifting mechanism 70 to move down along with the cell module 3 and pass through a second opening 42 on the tray 40, the bottom surface of the cell module 3 abutting against the tray 40, the cell module 3 is supported by the tray 40; driving the tray locking mechanism 60 to move the gripping assembly 43 towards the center of the tray 40, and gripping and fixing the cell module 3; and transferring the tray 40 loaded with the cell module 3 to the next procedure.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all technical features in the technical solutions described in the foregoing embodiments. These modifications or equivalent replacements, which do not cause the essence of corresponding technical solutions to depart from the scope of the technical solutions of the embodiments of the present disclosure, shall fall within the scope of the claims and the specification of the present disclosure. In particular, the technical features mentioned in each embodiment can be combined arbitrarily without any structural conflict. The present disclosure is not limited to the particular embodiment disclosed herein, and includes all technical solutions falling within the scope of the claims.

## Claims

1. A cell module stacking device, comprising:
a rack;
a support mechanism configured to support a plurality of cells;
a pressing mechanism connected to the rack, a part of the pressing mechanism being movable in an axial direction of the support mechanism, and configured to press the plurality of cells into a cell module; and
a tray, wherein the tray is disposed on the rack in such a manner that the tray is movable relative to the rack, the tray being configured to support the cell module.

2. The cell module stacking device according to claim 1, wherein the support mechanism comprises a first support member and a second support member that are arranged in parallel, each of the first support member and the second support member being connected to the rack in a relatively slidable manner, and configured to slide in a direction perpendicular to the axial direction of the support mechanism in such a manner that the first support member and the second support member are relatively close to each other or relatively far away from each other.

3. The cell module stacking device according to claim 2, wherein the stacking device further comprises a retractable mechanism connected to the rack, the first support member and the second support member each being connected to the retractable mechanism and being relatively close to each other or relatively far away from each other under an action of the retractable mechanism.

4. The cell module stacking device according to claim 3, wherein the retractable mechanism comprises a first drive member and a second drive member, the first drive member being connected to the first support member in a driving manner, and the second support member being connected to the second drive member in a driving manner.

5. The cell module stacking device according to claim 3, wherein the tray is disposed on the rack in a relatively slidable manner, wherein when the first support member and the second support member are spaced apart from each other and form a first opening, the tray is configured to slide to a position below the support mechanism and exactly face towards the first opening.

6. The cell module stacking device according to claim 5, wherein:
the stacking device further comprises at least one tray locking mechanism;
the tray is provided with at least one gripping assembly; and
the at least one tray locking mechanism is detachably connected to the at least one gripping assembly, and configured to drive the at least one gripping assembly to move in such a manner that the at least one gripping assembly grips or releases the cell module on the tray.

7. The cell module stacking device according to claim 6, wherein the at least one tray locking mechanism comprises a third drive member, a fourth drive member, and a locking member, the locking member being configured to be connected to the at least one gripping assembly and move in a vertical direction under driving of the third drive member, and the locking member being configured to drive the at least one gripping assembly to move together in the axial direction of the support mechanism under an action of the fourth drive member.

8. The cell module stacking device according to claim 5, wherein the stacking device further comprises a lifting mechanism connected to the rack, the lifting mechanism at least comprising a top plate being capable of moving up and down, the tray having a second opening passing through the tray, and the top plate being configured to pass through the second opening and the first opening sequentially and abut against the cell module.

9. The cell module stacking device according to claim 8, wherein in the axial direction of the support mechanism, a length of the top plate is smaller than a length of the second opening and greater than a length of the cell module.

10. The cell module stacking device according to claim 9, wherein in the direction perpendicular to the axial direction of the support mechanism, a width of the second opening is smaller than a width of the cell module.

11. The cell module stacking device according to claim 8, wherein the lifting mechanism further comprises a mounting plate and a fifth drive member, the mounting plate being connected to the rack, and the fifth drive member being fixed to the mounting plate and connected to the top plate in a driving manner, to drive the top plate to move up and down.

12. The cell module stacking device according to any one of claims 1 to 11, wherein the stacking device further comprises a brush mechanism at least comprising a brush, the brush being capable of moving in the axial direction of the support mechanism and configured to clean the support mechanism.

13. The cell module stacking device according to any one of claims 1 to 11, wherein the pressing mechanism comprises a sixth drive member and a pressing plate assembly, the sixth drive member being configured to drive the pressing plate assembly to move in the axial direction of the support mechanism, and the pressing plate assembly at least comprising a pressing plate configured to press the plurality of cells.

14. The cell module stacking device according to any one of claims 1 to 11, wherein:
the first support member comprises a first bottom support plate and a first side support plate connected to the first bottom support plate, the first bottom support plate and the first side support plate forming an L-shaped structure; and/or
the second support member comprises a second bottom support plate and a second side support plate connected to the second bottom support plate, the second bottom support plate and the second side support plate forming an L-shaped structure.

15. A cell module stacking method, being implemented by the stacking device according to any one of claims 1 to 14 and comprising steps of:
placing a plurality of cells on the support mechanism along the axial direction of the support mechanism, any two adjacent cells of the plurality of cells being spaced apart from each other;
driving the pressing mechanism to move in the axial direction of the support mechanism to press the plurality of cells into the cell module, and stacking the plurality of cells into a cell module; and
transferring the cell module to a tray.

16. The cell module stacking method according to claim 15, further comprising, subsequent to said stacking the plurality of cells into the cell module:
driving a lifting mechanism to lift the cell module to enable a bottom surface of the cell module to leave the support mechanism;
driving a retractable mechanism to keep a first support member and a second support member relatively far away from each other, in such a manner that an opening size of a first opening between the first support member and the second support member is greater than a cross-sectional size of the cell module;
driving the lifting mechanism to move down along with the cell module and pass through a second opening on the tray, the bottom surface of the cell module abutting against the tray, the cell module being supported by the tray; and
transferring the tray loaded with the cell module to a next procedure.
